# EUROPEAN PATENT APPLICATION

(11) **EP 3 805 015 A1**
(43) Date of publication of application: **14.04.2021**
(21) Application number: 19810334.3
(22) Date of filing: 29.05.2019
(51) Int. Cl.: B60C 9/18, B60C 9/22

(54) **PNEUMATIC TIRE**

(30) Priority: 31.05.2018 JP 2018105510
(71) Applicant: Bridgestone Corporation, Chuo-Ku Tokyo 104-8340 (JP)
(72) Inventor: FUDEMOTO, Hiroyuki, Tokyo 104-8340 (JP)
(74) Representative: Oxley, Robin John George
(86) International application number: PCT/JP2019/021234
(87) International publication number: WO 2019/230769

(57) **Abstract**

Provided is a pneumatic tire comprising a carcass straddling between bead portions and extending toroidally, a belt including a cord, and a coating material made of a resin or a rubber and with which the cord is coated, the belt being disposed at a position outside a crown portion of the carcass in a tire radial direction, and a resin layer disposed between the carcass and the belt or at a position outside the belt in the tire radial direction, the resin layer being in contact with the coating material of the belt, and an outer end of the resin layer in a tire width direction is located, in the tire width direction, at the same position as in an outer end of the belt in the tire width direction, or located, in the tire width direction, outside the outer end of the belt in the tire width direction.

## Description

### TECHNICAL FIELD

The present disclosure relates to a pneumatic tire.

### BACKGROUND

Heretofore, in a pneumatic tire, for a purpose of exerting a hoop effect of tightening a carcass to improve rigidity of a tread, a belt is usually disposed outside the carcass in a tire radial direction (e.g., PTL 1).

### CITATION LIST

### Patent Literature

PTL 1: Japanese Patent Laid-Open No. 1998-035220

### SUMMARY

### (Technical Problem)

An object of the present disclosure is to provide a pneumatic tire capable of improving durability of a belt.

### (Solution to Problem)

A pneumatic tire as a first aspect of the present disclosure comprises a carcass straddling between bead portions and extending toroidally, a belt including a cord and a coating material that is made of a resin or a rubber and with which the cord is coated, the belt being disposed at a position outside a crown portion of the carcass in a tire radial direction, and a resin layer disposed between the carcass and the belt or at a position outside the belt in the tire radial direction, the resin layer being in contact with the coating material of the belt, wherein an outer end of the resin layer in a tire width direction is located, in the tire width direction, at the same position as in an outer end of the belt in the tire width direction, or located, in the tire width direction, outside the outer end of the belt in the tire width direction.

### (Advantageous Effect)

According to the present disclosure, a pneumatic tire capable of improving durability of a belt can be provided.

### BRIEF DESCRIPTION OF THE DRAWINGS

In the accompanying drawings:
FIG. 1 is a cross-sectional view of a tire as an embodiment of the present disclosure in a cross section of the tire parallel to a tire width direction;
FIG. 2 is a view illustrating a modification of the tire illustrated in FIG. 1;
FIG. 3 is a view illustrating a modification of the tire illustrated in FIG. 1; and
FIG. 4 is a view illustrating a modification of the tire illustrated in FIG. 1.

### DETAILED DESCRIPTION

Hereinafter, description will be made as to an embodiment of a pneumatic tire according to the present disclosure with reference to the drawings. In each drawing, common members and regions are denoted with the same reference signs.

Hereinafter, it is considered that a dimension of each element, a length relationship between respective elements, a positional relation therebetween, and the like are measured in a reference state where a pneumatic tire is assembled to an applicable rim, filled with a prescribed internal pressure and unloaded, unless otherwise mentioned.

Here, an "applicable rim" indicates an approved rim (a measuring rim in Standards Manual of ETRTO, and a design rim in Year Book of TRA) in an applicable size described or to be described in the future in an industrial standard effective in a district where the pneumatic tire is produced and used, for example, JATMA Year Book of JATMA (the Japan Automobile Tyre Manufacturers Association) in Japan, Standards Manual of ETRTO (the European Tyre and Rim Technical Organization) in Europe, Year Book of TRA (the Tire and Rim Association, Inc.) in U.S. or the like (that is, the above "applicable rim" also includes a size that can be included in the above industrial standard in the future, in addition to the existing size. Examples of a "size to be described in the future" include sizes described as "future developments" in the 2013 edition of Standards Manual of ETRTO). However, it is considered that a rim having a size that is not described in the above industrial standard is a rim having a width corresponding to a bead width of the pneumatic tire. Furthermore, "the prescribed internal pressure" refers to an air pressure (a maximum air pressure) corresponding to a maximum load capability of a single wheel in an applicable size and ply rating described in Year Book of JATMA described above, or the like. The prescribed internal pressure having a size that is not described in the above industrial standard refers to an air pressure (the maximum air pressure) corresponding to the maximum load capability prescribed for each vehicle to which the tire is assembled. Additionally, "the maximum load" that will be described later refers to a load corresponding to the above tire maximum load capability of the standard of JATMA or the like among tires having the applicable size, or the maximum load having a size that is not described in the above industrial standard means a load corresponding to the maximum load capability prescribed for each vehicle to which the tire is assembled.

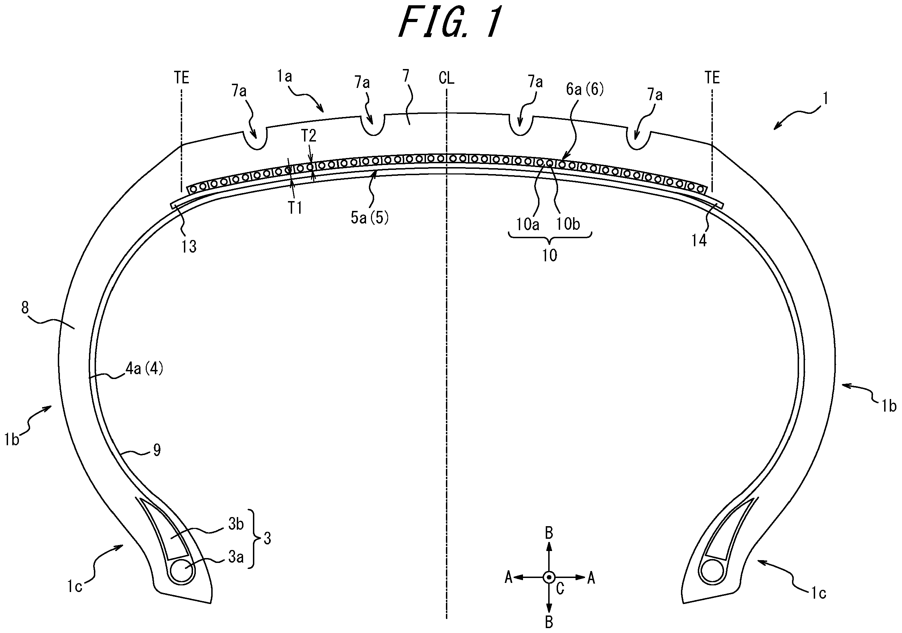

FIG. 1 is a view illustrating a pneumatic tire 1 (hereinafter referred to simply as "the tire 1") as an embodiment of the present disclosure. FIG. 1 is a cross-sectional view of the tire 1 in a cross section parallel to a tire width direction A. Hereinafter, this cross section will be described as "the tire width direction cross section". The tire 1 of the present embodiment has a configuration symmetric to a tire equator plane CL, but may have a configuration asymmetric to the tire equatorial plane CL.

As illustrated in FIG. 1, the tire 1 comprises a tread portion 1a, a pair of sidewall portions 1b extending from opposite end portions of the tread portion 1a in the tire width direction A to an inner side in a tire radial direction B, and a pair of bead portions 1c provided in end portions inside the respective sidewall portions 1b in the tire radial direction B. The tire 1 of the present embodiment is a radial tire for a tubeless type of passenger vehicle. Here, "the tread portion 1a" means a portion sandwiched between tread edges TE on opposite sides in the tire width direction A. Furthermore, each of "the bead portions 1c" means a portion where a bead member 3 described later is located in the tire radial direction B. Then, each of "the sidewall portions 1b" means a portion between the tread portion 1a and the bead portion 1c. Note that each of "the tread edges TE" means a position of a contact patch on an outermost side in the tire width direction in a state where the tire is mounted to the above applicable rim, filled with the above prescribed internal pressure, and loaded with the maximum load.

The tire 1 comprises the bead member 3, a carcass 4, a resin layer 5, a belt 6, a tread rubber 7, a side rubber 8, and an inner liner 9.

[Bead Member 3]

The bead member 3 is embedded in the bead portion 1c. The bead member 3 comprises a bead core 3a, and a bead filler 3b made of a rubber and located outside the bead core 3a in the tire radial direction B. The bead core 3a comprises a plurality of bead wires having a periphery coated with the rubber. Each bead wire is formed of a steel cord. The steel cord comprises, for example, a steel monofilament or stranded wire.

[Carcass 4]

The carcass 4 straddles between the pair of bead portions 1c, more specifically between the bead cores 3a of the pair of bead members 3, and extends toroidally. Furthermore, the carcass 4 includes at least a radial structure.

Furthermore, the carcass 4 is constituted of one or more (one in the present embodiment) carcass plies 4a in which a carcass cord is disposed at an angle, for example, from 75° to 90° in a tire circumferential direction C (see FIG. 1 or the like). This carcass ply 4a comprises a ply main body located between the pair of bead cores 3a, and a ply folded portion folded from an inner side to an outer side in the tire width direction A around the bead core 3a at the opposite ends of the ply main body. Furthermore, the bead filler 3b extending from the bead core 3a to the outer side in the tire radial direction B in a tapered state is disposed between the ply main body and the ply folded portion. As the carcass cord that forms the carcass ply 4a, in the present embodiment, a polyester cord is employed. Alternatively, an organic fiber cord made of nylon, rayon, aramid or the like may be used, or a metal cord made of steel may be employed as required. Furthermore, a number of the carcass plies 4a may be two or more.

[Resin Layer 5]

The resin layer 5 may be disposed between the carcass 4 and the belt 6 described later, or at a position outside the belt 6 in the tire radial direction B. The resin layer 5 of the present embodiment is disposed between the carcass 4 and the belt 6 described later, at a position outside a crown portion of the carcass 4 in the tire radial direction B. The resin layer 5 is in contact with a coating material 10a of the belt 6 described later.

Furthermore, the resin layer 5 does not comprise any cords, differently from the belt 6 described later. That is, any cords are not arranged in the resin layer 5.

The resin layer 5 of the present embodiment is constituted of a resin annular body 5a extending continuously over an entire area in the tire circumferential direction C. The resin annular body 5a as the resin layer 5 can be formed, for example, by joining a first annular portion made of a resin and located on one side in the tire width direction A, and a second annular portion made of a resin and located on the other side in the tire width direction A, at a position of the tire equatorial plane CL through welding.

As the resin that forms the resin layer 5, for example, a thermoplastic elastomer or a thermoplastic resin may be used. Alternatively, a resin that causes crosslinking by heat or electron beams, or a resin that cures by thermal dislocation may be used. Note that the resin that forms the resin layer 5 does not include a rubber (an organic polymer substance exhibiting rubber elasticity at normal temperature).

Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, for example, a thermoplastic resin may be used in which a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation similarly prescribed in JIS K7113 is 50% or more, and a Vicat softening temperature (a method A) prescribed in JIS K7206 is 130°C or more.

Note that the resin layer 5 has an elastic modulus smaller than that of the coating material 10a described later in the belt 6. "The elastic modulus" described herein means a tensile elastic modulus. The elastic modulus of the resin layer 5 can be set to a range from 100 MPa to 1000 MPa, more preferably a range from 200 MPa to 700 MPa. Furthermore, a thickness of the resin layer 5 is set to a range from 0.1 mm to 5 mm, more preferably from 0.2 mm to 3 mm. Measurement of the tensile elastic modulus is performed in conformity with JIS K7113: 1995. Specifically, the measurement of the tensile elastic modulus is performed by using Shimadzu Autograph AGS-J (5KN) manufactured by Shimadzu Corporation and setting a tensile speed to 100 mm/min. Note that in a case of measuring the tensile elastic modulus of the resin layer, the resin layer may be punched to prepare a measurement sample. For example, a measurement sample made of the same material as in the resin layer may be separately prepared, and the elastic modulus may be measured.

In the present embodiment, an outer end of the resin layer 5 in the tire width direction A is located, in the tire width direction A, outside an outer end of the belt 6 described later in the tire width direction A. Alternatively, the outer end of the resin layer 5 in the tire width direction A and the outer end of the belt 6 described later in the tire width direction A may be located at the same position in the tire width direction A. This respect will be described later in detail.

[Belt 6]

The belt 6 is disposed outside the resin annular body 5a as the resin layer 5 in the tire radial direction B. Furthermore, the belt 6 comprises a cord 10b coated with the coating material 10a. Specifically, the belt 6 of the present embodiment comprises one or more (one in the present embodiment) belt layers arranged outside the crown portion of the carcass 4 and the resin annular body 5a as the resin layer 5 in the tire radial direction B. More specifically, as illustrated in FIG. 1, the belt 6 of the present embodiment is constituted of a circumferential belt 6a comprising only one circumferential belt layer.

The circumferential belt 6a as the belt 6 of the present embodiment is a spiral belt formed in a state where a steel cord as a metal belt cord is spirally wound around a tire central axis along the tire circumferential direction C (see FIG. 1 or the like) (at an angle of 10° or less, preferably 5° or less, more preferably 2° or less in the tire circumferential direction C). More specifically, the circumferential belt 6a as the belt 6 of the present embodiment is formed by a resin-coated cord 10 as a coated cord comprising the cord 10b such as a steel cord coated with a coating resin as the coating material 10a. The circumferential belt 6a as the belt 6 of the present embodiment is constituted of the resin-coated cord 10 in a state of being spirally wound around an outer surface of the resin annular body 5a in the tire radial direction B, along the tire width direction A over an area between after-mentioned reduced-diameter portions 13 and 14 of opposite end portions of the resin annular body 5a as the resin layer 5 in the tire width direction A.

The resin-coated cord 10 as the coated cord is joined to the outer surface of the resin annular body 5a as the resin layer 5 in the tire radial direction B while being wound around the outer surface of the resin annular body 5a in the tire radial direction B. In the present embodiment, the coating resin as the coating material 10a of the resin-coated cord 10 as the coated cord and the resin annular body 5a as the resin layer 5 are welded to join the resin-coated cord 10 and the resin annular body 5a. Additionally, the joining of the coating resin as the coating material 10a of the resin-coated cord 10 and the resin annular body 5a is not limited to the welding, and may be performed by bonding with an adhesive or the like.

Furthermore, in the resin-coated cord 10 as the coated cord of the present embodiment, portions adjacent to each other in the tire width direction A are joined. In the present embodiment, the portions of the resin-coated cord 10 that are adjacent to each other in the tire width direction A are joined by welding the coating resin as the coating material 10a. However, the joining of the portions of the resin-coated cord 10 that are adjacent to each other in the tire width direction A is not limited to the welding, and may be performed by bonding with an adhesive or the like.

The belt 6 of the present embodiment has an almost constant thickness regardless of a position thereof in the tire width direction A. The thickness of the belt 6 of the present embodiment may be set to, for example, a range from 1.5 mm to 7 mm, more preferably a range from 2 mm to 5 mm. Furthermore, an elastic modulus of the coating resin as the coating material 10a of the belt 6 may be set to a range from 100 MPa to 1000 MPa, more preferably a range from 200 MPa to 700 MPa. Measurement of a tensile elastic modulus is performed in conformity with JIS K7113: 1995. Specifically, the measurement of the tensile elastic modulus is performed by using Shimadzu Autograph AGS-J (5KN) manufactured by Shimadzu Corporation and setting a tensile speed to 100 mm/min. Note that in a case of measuring the tensile elastic modulus of the coating resin, the coating resin may be punched to prepare a measurement sample if possible. For example, a measurement sample made of the same material as in the coating resin may be separately prepared, and the elastic modulus may be measured.

As illustrated in FIG. 1, the resin-coated cord 10 of the present embodiment comprises two steel cords, and may be a resin-coated cord comprising only one steel cord or a resin-coated cord comprising three or more steel cords.

For the cord 10b, any known material may be used, and, for example, the above steel cord may be used. The steel cord may comprise, for example, a steel monofilament or stranded wire. Furthermore, for the cord 10b, organic fibers, carbon fibers, stranded wires of such fibers, or the like may be used.

Additionally, for the coating resin as the coating material 10a, for example, a thermoplastic elastomer or a thermoplastic resin may be used. Alternatively, a resin that causes crosslinking by heat or electron beams, or a resin that cures by thermal dislocation may be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, for example, a thermoplastic resin may be used in which a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation similarly prescribed in JIS K7113 is 50% or more, and a Vicat softening temperature (a method A) prescribed in JIS K7206 is 130°C or more. It is preferable that the tensile elastic modulus (prescribed in JIS K7113: 1995) of the coating resin as the coating material 10a with which the cord 10b is coated is 50 MPa or more. It is also preferable that the tensile elastic modulus of the coating resin as the coating material 10a with which the cord 10b is coated is 1000 MPa or less. Note that the coating resin described herein does not include a rubber (an organic polymer substance exhibiting rubber elasticity at normal temperature).

The belt 6 of the present embodiment is formed in a state where the resin-coated cord 10 is spirally wound, but there are not any special restrictions on such a configuration, as long as a plurality of cords 10b arranged in the tire width direction A and extending along the tire circumferential direction C is coated with the coating material 10a made of the resin or rubber. However, it is preferable that the belt 6 is the spiral belt formed in a state where a coated cord comprising the cord 10b coated with the coating material 10a is spirally wound as in the present embodiment. In this case, the circumferential belt 6a can be formed by the cord 10b that is continuous in the tire circumferential direction C without any joined portions, and hence rigidity of the tire 1 in the tire circumferential direction C can be improved.

[Tread Rubber 7 and Side Rubber 8]

The tread rubber 7 forms an outer surface of the tread portion 1a in the tire radial direction B (hereinafter, referred to as "the tread outer surface"), and in the tread outer surface of the present embodiment, a tread pattern including a circumferential groove 7a extending in the tire circumferential direction C (see FIG. 1 or the like), a non-illustrated width direction groove extending in the tire width direction A and the like is formed. The side rubber 8 forms an outer surface of the sidewall portion 1b in the tire width direction A, and is formed integrally with the tread rubber 7.

[Inner Liner 9]

The inner liner 9 is stacked on an inner surface of the carcass 4, and is made of a butyl-based rubber having a low air permeability in the present embodiment. Note that the butyl-based rubber means butyl rubber, and its derivative, such as halogenated butyl rubber.

Next, description will be made as to a characteristic part of the tire 1 in detail.

First, in a case where a tire only including the belt 6 without using the resin layer 5 is assumed as a comparative example, cracks may be generated at a position of the coating material 10a made of the resin or rubber between the cords 10b of the belt 6. Particularly, in the case of the belt 6 formed by spirally winding the resin-coated cord 10 and joining the portions adjacent to each other in the tire width direction A through the welding or the like as in the present embodiment, a joined portion having a low strength extends along the cord 10b at the position of the coating material between the cords 10b. Therefore, the cracks are easily generated in the coating resin as the coating material 10a at the position of the belt 6 between the cords 10b, more specifically, for example, at the position of the belt 6 between the cords 10b within three times to spirally wind the resin-coated cord 10 from the outer end of the belt 6 in the tire width direction A.

On the other hand, in the tire 1 of the present embodiment illustrated in FIG. 1, the resin layer 5 is disposed between the carcass 4 and the belt 6. Furthermore, in the tire 1 of the present embodiment illustrated in FIG. 1, the resin layer 5 is in contact with the coating material 10a of the belt 6. Therefore, the belt 6 is reinforced with the resin layer 5, and the cracks are hard to be generated at a position of the coating material 10a between the cords 10b.

Furthermore, as described above, the outer end of the resin layer 5 in the tire width direction A is located, in the tire width direction A, outside the outer end of the belt 6 in the tire width direction A. According to this configuration, as compared with a configuration where the outer end of the resin layer in the tire width direction A is located, in the tire width direction A, inside the outer end of the belt in the tire width direction A, an edge portion of the outer end of the resin layer 5 in the tire width direction A can be inhibited from pushing the belt 6 in the tire radial direction B. Consequently, stress can be inhibited from being concentrated on the belt 6, at a position of the outer end of the resin layer 5 in the tire width direction A. As a result, the cracks are harder to be generated in the coating material 10a of the belt 6, and durability of the belt 6 can be improved.

Furthermore, as described above, the resin layer 5 of the present embodiment is constituted of the resin annular body 5a extending continuously over the entire area in the tire circumferential direction C. According to this configuration, the rigidity of the tire 1 in the tire circumferential direction C can be improved, and deformation of the tread portion 1a can be inhibited. Consequently, a load to be applied to the belt 6 can be decreased. As a result, the durability of the belt 6 can be further improved.

Additionally, it is preferable that the resin annular body 5a as the resin layer 5 comprises the reduced-diameter portions 13 and 14 each having an outer diameter reduced toward the outer end in the tire width direction A, at opposite end portions in the tire width direction A. Specifically, the outer surface of the resin annular body 5a of the present embodiment in the tire radial direction B has a barrel shape, and not only an end portion of the annular body in the tire width direction A but also all the opposite sides of the body via the tire equatorial plane CL in the tire width direction A are constituted of the reduced-diameter portions 13 and 14. However, the resin annular body may comprise the reduced-diameter portions 13 and 14 provided only in the end portions of the body in the tire width direction A. Furthermore, the reduced-diameter portions 13 and 14 of the end portions of the resin annular body 5a in the tire width direction A extend to outer sides of the tread edges TE in the tire width direction A.

In a case where the resin annular body 5a comprises the reduced-diameter portions 13 and 14, as compared with a case where the resin annular body 5a has uniform inner and outer diameters without being provided with the reduced-diameter portions 13 and 14, a ground contact pressure is inhibited from being locally increased at positions near the tread edges TE, and uneven wear on the tread outer surface can be inhibited.

Furthermore, it is preferable that the thickness of the resin layer 5 is smaller than the thickness of the belt 6. The thickness of the resin layer 5 means a maximum thickness T1 of the resin layer 5. The resin annular body 5a as the resin layer 5 of the present embodiment has a uniform thickness regardless of its position in the tire width direction A, and hence the maximum thickness T1 of the resin layer 5 means a thickness of the resin annular body 5a as the resin layer 5 at any position of the resin annular body in the tire width direction A. The thickness of the belt 6 means a maximum thickness T2 of the belt 6. The circumferential belt 6a as the belt 6 of the present embodiment has a uniform thickness regardless of its position in the tire width direction A, and hence the maximum thickness T2 of the belt 6 means the thickness of the circumferential belt 6a as the belt 6 at any position of the belt in the tire width direction A.

In a configuration where the thickness of the resin layer 5 is smaller than the thickness of the belt 6, as compared with a configuration where the thickness of the resin layer is equal to or larger than the thickness of the belt 6, suitable handling properties of the belt 6 are achieved, and the durability is improved, while the lighter tire 1 can be provided.

Additionally, it is preferable that the elastic modulus of the resin layer 5 is smaller than the elastic modulus of the coating material 10a of the belt 6. According to this configuration, the resin layer 5 can inhibit distortion from being concentrated on a part of the coating material 10a of the belt 6. Consequently, damages such as the cracks in the coating material 10a of the belt 6 can be inhibited, and the durability of the belt 6 can be further improved. Furthermore, the resin layer 5 can decrease steps in rigidity in the tire width direction A via the outer end of the belt 6 in the tire width direction A as a boundary, and separation of the outer end of the belt 6 in the tire width direction A from an adjacent member can be inhibited from being caused. Consequently, durability of the whole tire 1 can be improved.

Furthermore, the resin layer 5 is welded to the coating material 10a of the belt 6. In this case, a force applied from the resin layer 5 to the belt 6 is further distributed in the tire width direction A in the belt 6. Consequently, the distortion can be inhibited from being concentrated on a part of the belt 6 in the tire width direction A. As a result, the damages, such as the cracks, in the coating material 10a of the belt 6 can be inhibited, and the durability of the belt 6 can be further improved.

It is preferable that a difference between a melting point of a resin material that forms the resin layer 5 and a melting point of a material that forms the coating material 10a of the belt 6 is 30°C or less. In this case, the resin layer 5 and the coating material 10a of the belt 6 can be easily welded.

The pneumatic tire according to the present disclosure is not limited to specific configurations illustrated in the above embodiment and modification, and can be variously modified and changed without departing from the scope of claims.

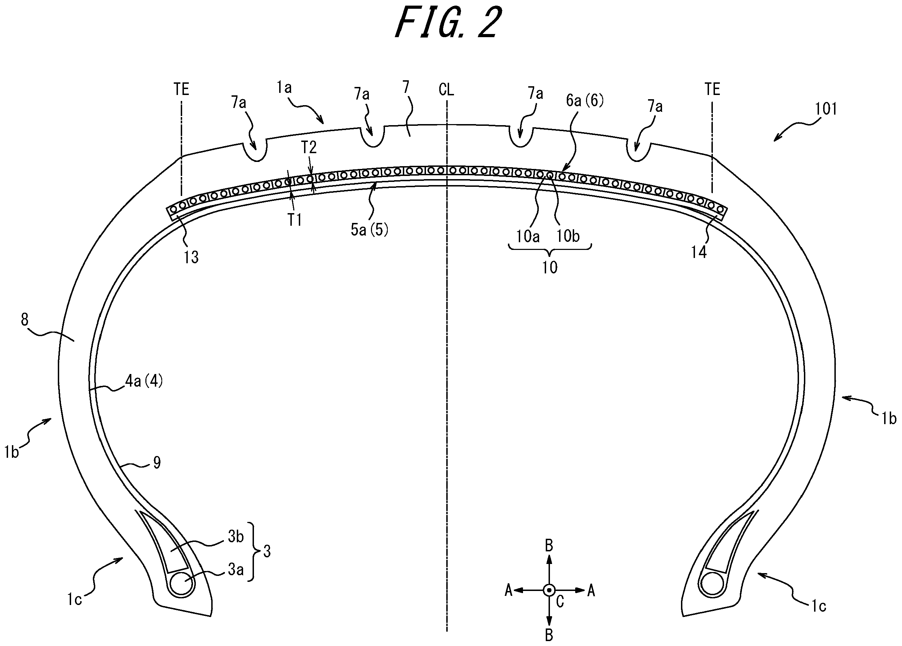

The outer end of the resin layer 5 of the above present embodiment in the tire width direction A is located, in the tire width direction A, outside the outer end of the belt 6 in the tire width direction A, but the present disclosure is not limited to this configuration. FIG. 2 is a tire width direction cross-sectional view illustrating a tire 101 as a modification of the tire 1 of the present embodiment. As illustrated in FIG. 2, an outer end of a resin layer 5 in a tire width direction A may be located, in the tire width direction A, at the same position as in an outer end of a belt 6 in the tire width direction A. However, as illustrated in FIG. 1, it is preferable that the outer end of the resin layer 5 in the tire width direction A is located, in the tire width direction A, outside the outer end of the belt 6 in the tire width direction A. According to this configuration, at the position of the outer end of the resin layer 5 in the tire width direction A, stress can be further inhibited from being concentrated on the belt 6. As a result, the cracks are harder to be generated in the coating material 10a of the belt 6, and the durability of the belt 6 can be further improved.

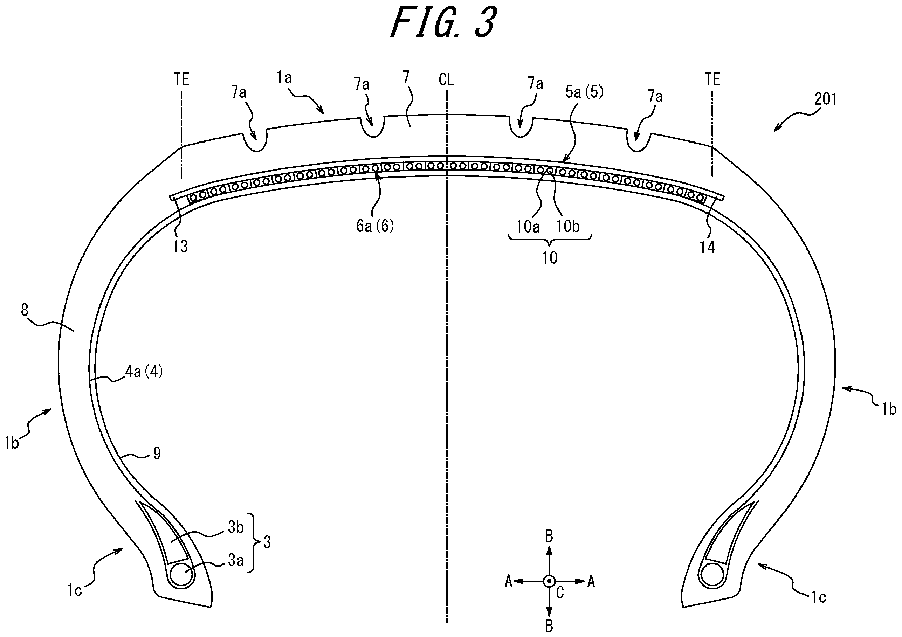

Furthermore, the resin layer 5 of the present embodiment illustrated in FIG. 1 is disposed between the carcass 4 and the belt 6, but the present disclosure is not limited to this configuration. FIG. 3 is a tire width direction cross-sectional view illustrating a tire 201 as a modification of the tire 1 of the present embodiment. As illustrated in FIG. 3, a resin layer 5 may be disposed at a position outside a belt 6 in a tire radial direction B. However, for arrangement of the resin layer 5, the arrangement illustrated in FIG. 1 is more preferable than the arrangement illustrated in FIG. 3. In the arrangement of the resin layer 5 illustrated in FIG. 1, a position of an end portion of the resin layer 5 in the tire width direction A is more stabilized. Consequently, in the end portion of the resin layer 5 in the tire width direction A illustrated in FIG. 1, separation from another member such as an adjacent rubber is hard to occur. Furthermore, in FIG. 3, an outer end of the resin layer 5 in a tire width direction A is located, in the tire width direction A, outside an outer end of the belt 6 in the tire width direction A, and similarly to FIG. 2, the outer end of the resin layer 5 in the tire width direction A may be disposed, in the tire width direction A, at the same position as in the outer end of the belt 6 in the tire width direction A.

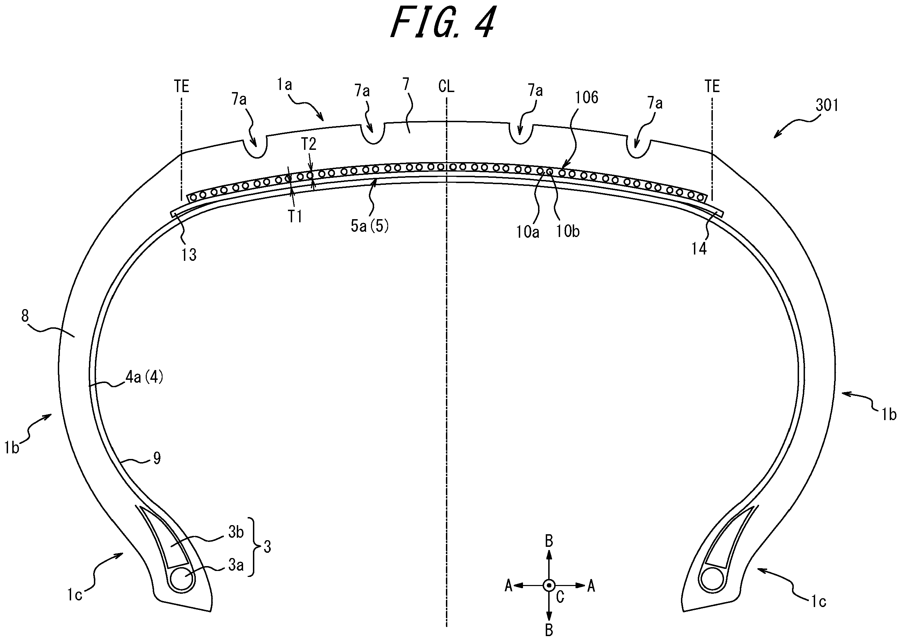

Furthermore, FIG. 1 to FIG. 3 illustrate the coating material 10a made of the resin, but the coating material 10a may be made of a rubber. FIG. 4 is a view illustrating a tire 301 including a belt 106 in which a coating rubber is used as a coating material 10a. The belt 106 illustrated in FIG. 4 is different from the belt 6 illustrated in FIG. 1 only in the coating material 10a. The belt 106 illustrated in FIG. 4 is constituted of a rubber-coated cord as a coated cord comprising a cord 10b coated with the coating rubber as the coating material 10a. Specifically, the belt 106 illustrated in FIG. 4 is constituted of a rubber-coated cord in a state of being spirally wound. Furthermore, the belt 106 may be, similarly to the belt 6, disposed inside a resin layer 5 in a tire radial direction B. Furthermore, an outer end of the resin layer 5 in a tire width direction A illustrated in FIG. 4 may be located at the same position as in an outer end of the belt 106 in the tire width direction A, in the tire width direction A.

### INDUSTRIAL APPLICABILITY

The present disclosure relates to a pneumatic tire.

### REFERENCE SIGNS LIST

- 1, 101, 201, and 301: pneumatic tire
- 1a: tread portion
- 1b: sidewall portion
- 1c: bead portion
- 3: bead member
- 3a: bead core
- 3b: bead filler
- 4: carcass
- 4a: carcass ply
- 5: resin layer
- 5a: resin annular body
- 6 and 106: belt
- 6a: circumferential belt
- 7: tread rubber
- 7a: circumferential groove
- 8: side rubber
- 9: inner liner
- 10: resin-coated cord
- 10a: coating material
- 10b: cord
- 13 and 14: reduced-diameter portion
- A: tire width direction
- B: tire radial direction
- C: tire circumferential direction
- T1: maximum thickness of the resin layer
- T2: maximum thickness of the belt
- CL: tire equatorial plane
- TE: tread edge

## Claims

1. A pneumatic tire comprising:
a carcass straddling between bead portions and extending toroidally,
a belt including a cord and a coating material that is made of a resin or a rubber and with which the cord is coated, the belt being disposed at a position outside a crown portion of the carcass in a tire radial direction, and
a resin layer disposed between the carcass and the belt or at a position outside the belt in the tire radial direction, the resin layer being in contact with the coating material of the belt, wherein an outer end of the resin layer in a tire width direction is located, in the tire width direction, at the same position as in an outer end of the belt in the tire width direction, or located, in the tire width direction, outside the outer end of the belt in the tire width direction.

2. The pneumatic tire according to claim 1, wherein the resin layer is constituted of a resin annular body continuously extending over an entire area in a tire circumferential direction.

3. The pneumatic tire according to claim 1 or 2, wherein a thickness of the resin layer is smaller than a thickness of the belt.

4. The pneumatic tire according to any one of claims 1 to 3,
wherein an elastic modulus of the resin layer is smaller than an elastic modulus of the coating material of the belt.

5. The pneumatic tire according to any one of claims 1 to 4,
wherein the resin layer is welded to the coating material of the belt.

6. The pneumatic tire according to claim 5, wherein a difference between a melting point of a resin material that forms the resin layer and a melting point of a material that forms the coating material of the belt is 30°C or less.

7. The pneumatic tire according to any one of claims 1 to 6,
wherein the belt is formed in a state where a coated cord comprising the cord coated with the coating material is spirally wound around an outer surface of the resin layer in the tire radial direction, along the tire width direction.
